Europäisches Patentamt

European Patent Office

Office européen des brevets

(11) Veröffentlichungsnummer: **0 184 131**
**B1**

(12) # EUROPÄISCHE PATENTSCHRIFT

(45) Veröffentlichungstag der Patentschrift:
**12.10.88**

(51) Int. Cl.⁴: **B 21 D 53/30,** B 21 D 53/26,
C 22 F 1/04

(21) Anmeldenummer: **85115053.2**

(22) Anmeldetag: **27.11.85**

(54) Verfahren zum Herstellen und Ausrichten eines Fahrzeugrades.

(30) Priorität: **27.11.84 DE 3443227**

(43) Veröffentlichungstag der Anmeldung:
**11.06.86 Patentblatt 86/24**

(45) Bekanntmachung des Hinweises auf die Patenterteilung:
**12.10.88 Patentblatt 88/41**

(84) Benannte Vertragsstaaten:
**BE DE FR GB IT SE**

(56) Entgegenhaltungen:
**EP-A-0 096 399**
**GB-A-1 484 511**
**US-A-3 172 787**
**US-A-4 105 255**

(73) Patentinhaber: **NORSK HYDRO A.S., Bygdoy Allé 2,
N-0257 Oslo 2 (NO)**

(72) Erfinder: **Berg, Otto, Undelstadvn. 84C, N-1370
Asker (NO)**

(74) Vertreter: **Patentanwälte Zellentin,
Zweibrückenstrasse 15, D-8000 München 2 (DE)**

EP 0 184 131 B1

**Beschreibung**

Die Erfindung betrifft ein Verfahren zum Herstellen und Ausrichten eines Fahrzeugrades, wobei zunächst eine aus einer aushärtbaren Aluminiumlegierung bestehende Felge hergestellt wird, die Felge lösungsgeglüht wird und dann unter Verwendung eines Ausrichtwerkzeuges, welches aus mindestens zwei, den Solldurchmesser bestimmenden, auf einer gemeinsamen Achse angeordneten Formgebern besteht, ausgerichtet wird.

Fahrzeugräder für Luftreifen werden hauptsächlich aus Stahl und in der Form einer zusammengesetzten Einheit, bestehend aus einer Radscheibe und einer Felge, hergestellt. Das Rad hat bestimmten Bedingungen zu entsprechen mit Rücksicht auf den Durchmesser der Felge, Umfang, Breite, Tiefe und Geradheit. Nachdem die Felge durch Walzen hergestellt worden ist, wird sie auf die Radscheibe aufgezogen. Dieses geschieht üblicherweise mit Hilfe einer Spreizform oder alternativ zunächst mit einer Spreizform, welche die Felge weiter als die erforderlichen Abmessungen spreizt und dann durch Druckverformung, bei welcher die Felge auf die Radscheibe gepreßt wird. Für Räder, welche aus einem Stück hergestellt werden, z. B. gegossene oder geschmiedete Aluminiumräder, ist diese Methode weniger passend, insbesondere weil diese Räder mit geringeren Toleranzen hergestellt werden - im Hinblick auf die Rundheit verglichen mit herkömmlichen Stahlrädern. Die Felgen von gegossenen oder geschmiedeten Aluminiumrädern werden deshalb häufig spanabhebend nachgearbeitet um die engeren Toleranzen einzuhalten.

Bei der Herstellung von einstückigen Aluminiumrädern durch Drücken ist es wünschenswert, die Felge so zu erhalten wie sie gedrückt wurde, d.h. ohne spanabhebende Nachbearbeitung. Hierfür sind einerseits Kostengründe maßgebend, andererseits sprechen hierfür auch die vorteilhaften Eigenschaften des Metalls an der durch Drücken entstandenen Oberfläche. Drücken ergibt eine sehr gleichmäßige Verteilung des Werkstoffes in der Felge und eine außerordentliche Rundheit, welche eine geringe Unwucht bedeutet. Eine anschließende Wärmebehandlung kann jedoch gewisse Formänderungen hervorrufen.

Zur Verbesserung der Materialeigenschaften verschiedener Legierungen, u.a. Aluminumlegierungen, ist Lösungsglühen bekannt, wie es beispielsweise in "Robert B. Ross: Handbook of Metal Treatments and Testing, London", Seite 206 bis 208 beschrieben ist.

Ein verfahren gemäß dem Oberbegriff des Anspruchs ist in der US-A-3 172 787 beschrieben. Dort werden Radfelgen aus stranggegossenem Aluminiumprofil durch entsprechendes Rundbiegen und Schweißen hergestellt. Nach Fertigstellung der Schweißnaht werden die Felgen lösungsgeglüht und danach wiederum auf einem Formgeber ausgerichtet. Dieses bekannte verfahren ist jedoch recht aufwendig.

Aufgabe der Erfindung ist es daher, das Herstellen und Ausrichten eines Fahrzeugrades aus einer aushärtbaren Aluminiumlegierung derart zu ermöglichen, daß eine maßrichtige Formänderung bereits im Zusammenhang mit dem Lösungsglühen erzielt wird.

Die Aufgabe wird durch ein Verfahren mit den Merkmalen des Oberbegriffs dadurch gelöst, daß die Felge durch Drücken eines Bleches auf einen Durchmesser nicht kleiner als 98,7 % der Sollgröße hergestellt wird, und daß die noch vom Lösungsglühen erwärmte Felge unter Abkühlung auf die Formgeber aufgeschrumpft und dadurch ausgerichtet wird.

Durch das erfindungsgemäße Verfahren ergibt sich eine gleichmäßige Deformation der Felge.

Die Anwendung der thermischen Ausdehnung beim Lösungsglühen mit nachfolgendem Zusammenziehen hat den Vorteil, daß beide Verfahrensschritte kombiniert werden. Das Ausrichten wird dadurch durchgeführt, daß das Rad zum Schrumpfen über einen Formgeber gebracht wird, während es von der Lösungsglühtemperatur herunter gekühlt wird. Die Felge ist dann in der Lage, den Durchmesser und die Form des Formgebers innerhalb sehr enger Toleranzen anzunehmen. Um dieses Verfahren durchzuführen, ist ein Werkzeug erforderlich, welches aus zwei Formgebern auf einer gemeinsamen Achse besteht, für das Ausrichten beziehungsweise Aufziehen der Felge auf den Rand der Radscheibe. Dieses Ausrichtwerkzeug ist ferner so geformt, daß die Oberfläche der Radscheibe, welche an der Bremstrommel anliegen soll, die richtige Lage in Beziehung zur Felge hat.

Ein Rad, welches aus einer Felge und einer Scheibe besteht, ist aus einem Stück Metall durch Drücken derart hergestellt, daß der Durchmesser der Felge geringfügig kleiner als die Abmessung ist, welche für das fertige Produkt erforderlich ist. Der Durchmesser sollte jedoch nicht kleiner als 98,7 % der Abmessung des fertigen Produkts sein. Während des Aufheizens für das Lösungsglühen, z. B. auf 550° C, dehnt sich die Felge entsprechend dem thermischen Ausdehnungskoeffizienten des Werkstoffes aus. In der Praxis ergibt sich hier für die genannte Temperatur ein Wert von etwa 1,3 %. Nach dem Lösungsglühen wird das Rad entfernt, um abgekühlt zu werden, was auf dem Ausrichtwerkzeug dadurch erfolgt, daß das Rad in eine Ausrichtlehre hingelegt wird, in welcher zwei Formgeber auf einer gemeinsamen Achse angeordnet sind. Diese Formgeber werden in die erforderliche Position gebracht, wenn das Rad auf die erforderliche Temperatur durch Wassersprühen abgekühlt wird. Während dieses Vorgangs schrumpft die Felge ausreichend, um dadurch ausgerichtet zu werden, daß sie sich auf die Formgeber aufspannt. Räder, die so hergestellt werden, haben einen genauen Durchmesser und eine Rundheit innerhalb sehr enger Toleranzen. Das Verfahren hat eine Anzahl von deutlichen Vorteilen unter anderem dadurch, daß die Wärme vom Lösungsglühen ausgenutzt wird, um den Dehnungs- und Ausrichtvorgang zu kombinieren, was die Anzahl der Verfahrensschritte verringert.

Die Erfindung bezieht sich damit auf ein Verfahren zum Ausrichten von Fahrzeugrädern, die aus härtbarem Aluminiumblech hergestellt sind. Die Räder werden durch Drücken hergestellt mit Abmessungen, die geringfügig unter den endgültigen liegen. Während sie noch vom Lösungsglühen heiß sind, werden sie auf ein Ausrichtwerkzeug gebracht, welches aus einem oder mehreren Formgebern auf einer gemeinsamen Achse besteht. Diese Formgeber sind so dimensioniert, daß die Räder nach dem Abkühlen auf den richtigen Durchmesser schrumpfen.

## Patentanspruch

Verfahren zum Herstellen und Ausrichten eines Fahrzeugrades, wobei zunächst eine aus einer aushärtbaren Aluminiumlegierung bestehende Felge hergestellt wird, die Felge lösungsgeglüht wird und dann unter Verwendung eines Ausrichtwerkzeuges, welches aus mindestens zwei, den Solldurchmesser bestimmenden, auf einer gemeinsamen Achse angeordneten Formgebern besteht, ausgerichtet wird, dadurch gekennzeichnet, daß die Felge durch Drücken eines Bleches auf einen Durchmesser nicht kleiner als 98,7 % der Sollgröße hergestellt wird, und daß die noch vom Lösungsglühen erwärmte Felge unter Abkühlung auf die Formgeber aufgeschrumpft und dadurch ausgerichtet wird.

## Claim

Method of producing and trueing-up a vehicle wheel by first producing a rim consisting of a hardenable aluminium alloy, subjecting the rim to solution heat treatment and subsequently trueing-up the rim using a trueing-up tool consisting of at least two trueing-up formers determining the nominal diameter and being arranged on a common axis, characterized in that the rim is produced by spinning a sheet to a diameter not less than 98.7 % of the nominal size and that the rim still hot from solution heat treatment is shrinked, on cooling, to the trueing-up tools thus being trued up.

## Revendication

Procédé de fabrication et de calibrage d'une roue de véhicule, selon lequel on fabrique d'abord une jante en un alliage d'aluminium durcissable, on soumet cette jante à un recuit d'homogénéisation et de mise en solution solide, puis on la centre en utilisant un outil de calibrage, composé d'au moins deux éléments de mise en forme qui sont montés sur un axe commun et déterminent le diamètre nominal, procédé caractérisé en ce que l'on fabrique la jante par emboutissage d'une feuille métallique à un diamètre qui n'est pas inférieur à 98,7 % de la cote nominale, et l'on fait se contracter cette jante, encore chaude du recuit, en la refroidissant sur les éléments de mise en forme, ce qui la calibre.